**Europäisches Patentamt**

**European Patent Office**

**Office européen des brevets**

(11) Veröffentlichungsnummer: **0 084 071**
**B1**

# (12) EUROPÄISCHE PATENTSCHRIFT

(45) Veröffentlichungstag der Patentschrift:
21.08.85

(51) Int. Cl.⁴: **F 16 K 5/20**

(21) Anmeldenummer: 82100316.7

(22) Anmeldetag: **18.01.82**

(54) **Hahn mit kugelförmigem Küken.**

(43) Veröffentlichungstag der Anmeldung:
27.07.83 Patentblatt 83/30

(45) Bekanntmachung des Hinweises auf die Patenterteilung:
21.08.85 Patentblatt 85/34

(84) Benannte Vertragsstaaten:
**DE**

(56) Entgegenhaltungen:
**DE - A - 1 809 542**
**DE - A - 1 957 223**
**DE - B - 1 163 625**
**DE - B - 1 224 107**
**DE - B - 2 342 069**
**FR - A - 2 302 463**

(73) Patentinhaber: **Hartmann Patentverwaltung GmbH,
Alpenstrasse 14, Zug (CH)**

(72) Erfinder: **Meyer, Erich, Dr., Büntenstrasse 21,
CH-8116 Würenlos (CH)**
Erfinder: **Hartmann, Werner, Dr.-Ing., Casa Roncà,
CH-9114 Carona (CH)**

(74) Vertreter: **Johannesson, Benno, Dr.-Ing., Münder
Heerstrasse 4, D-3015 Wennigsen / Deister (DE)**

## Beschreibung

Die Erfindung bezieht sich auf einen Hahn mit kugelförmigem Küken. Die Brauchbarkeit derartiger Hähne wird wesentlich durch die Güte der Abdichtung zwischen dem Hahngehäuse und dem kugelförmigen Küken bestimmt. Dank der kugelförmigen Ausbildung des Kükens können ringförmige, in einer Ebene liegende Abdichtringe verwendet werden, die koaxial zur Rohrleitungsachse und symmetrisch zur Spindelachse angeordnet sind. Diese Dichtungsringe bestehen aus Hartgummi oder Kunststoff. Das Abdichtvermögen wird bestimmt durch den Andruck der Ringe an das kugelförmige Küken. Zweckmäßig wird der Andruck durch in das Hahngehäuse eingebaute elastische Mittel auf die Sitzringe, in die die Dichtungsringe eingebettet sind, ausgeübt.

Ein diesem Zweck dienender Hahn, entsprechend dem Oberbegriff des Patentanspruchs 1, ist bekannt aus der FR-A-2 302 463. Durch die im kennzeichnenden Teil des Patentanspruchs 1 angegebenen Mittel wird eine erhebliche Vereinfachung der bekannten Anordnung erreicht und außerdem der Ausbau des Kükens bei in die Rohrleitung eingebaut bleibender unterer Hahngehäusehälfte ermöglicht.

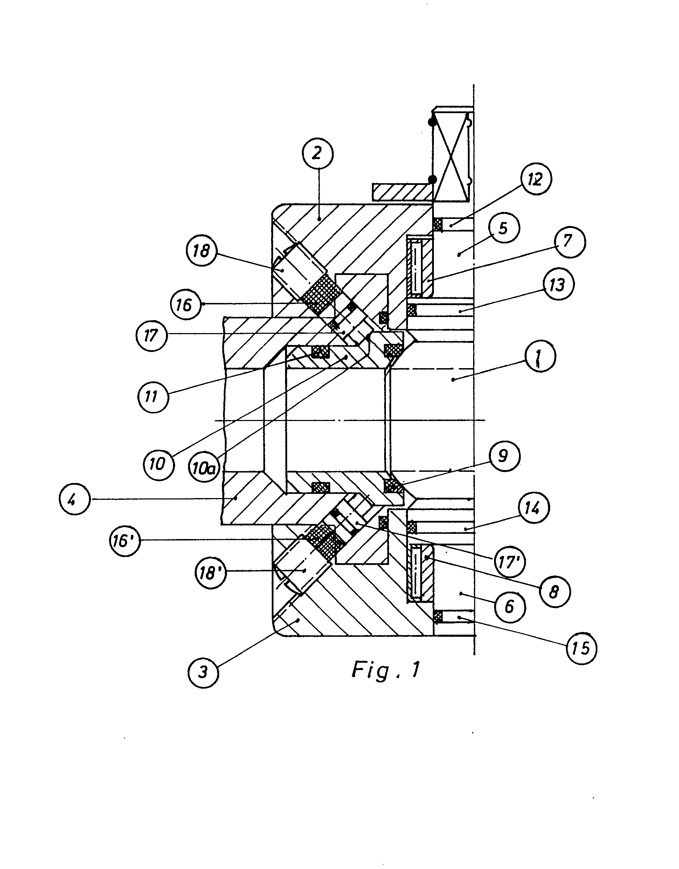

Der Hahn gemäß der Erfindung zeigt, daß entgegen dem Stand der Technik, bekannt aus FR-A-2 302 463, Fig. 1 und 2 (Schwinghebel 9 bzw. 28a), die Kraftübertragung vom Druckaggregat auf den Sitzzylinder ohne Zwischenschaltung eines richtungsändernden Koppelgliedes erfolgt. Hierdurch wird nicht nur eine Vereinfachung der Konstruktion zur Aufrechterhaltung des auf die Dichtungsringe ausgeübten Druckes erreicht, sondern auch eine Herausnahme des Kükens nach dem Abnehmen der oberen Gehäusehälfte ohne Ausbau der unteren Hahngehäusehälfte aus der Rohrleitung ermöglicht, was die Auswechslung verbrauchter Dichtungsringe erleichtert. In beiden Ausführungsformen der Erfindung können beim Anheben des Kükens nach dem Abnehmen der oberen Gehäusehälfte die Sitzringe nach außen ausweichen. Bei der aus FR-A-2 302 463 bekannten Anordnung dagegen würde eine derartige Ausweichbewegung der Sitzzylinder durch die im Gehäuse verbleibenden Koppelglieder zwischen Druckaggregat und Sitzzylinder gehindert werden, so daß das Gehäuse zur Ermöglichung einer Auswechslung der Dichtungsringe eine senkrecht zur Rohrleitungsachse orientierte Teilungsebene aufweisen muß; ein Herausnehmen des Kükens ist daher nur nach dem Ausbau des Hahns aus der Rohrleitung möglich.

Bei der erfindungsgemäßen Hahnausführung haben die als Zylinder ausgebildeten Sitzringe eine genügende Höhe, um ein Verkanten in den sie aufnehmenden Bohrungen beim Herausziehen des Kükens zu vermeiden.

Eine besondere Ausführungsart der Erfindung ist in dem abhängigen Anspruch angegeben.

Fig. 1 zeigt eine Hälfte des erfindungsgemäßen Hahns, und zwar einen durch die Kükenspindelachse und die Achse der Rohrleitung geführten Schnitt.

In Fig. 1 ist mit 1 das kugelförmige Küken, mit 2 und 3 die obere und untere Gehäusehälfte und mit 4 der — in der Fig. 1 von links — in das Hahngehäuse einmündende Rohrstutzen bezeichnet. Die Lagerzapfen 5 und 6 des Kükens sind in Wälzlagern 7 und 8 gelagert. Der — in der Fig. 1 linke — Dichtungsring 9 ist in einen als Zylinder ausgebildeten Sitzring 10 eingebettet. Der Sitzzylinder ist nach außen durch den Dichtungsring 11 abgedichtet, während die Abdichtung der Lagerzapfen 5 und 6 durch die Dichtungsringe 12— 15 besorgt wird.

Zur Ausübung einer Vorspannung auf den aus Hartgummi oder Kunststoff bestehenden Dichtungsring 9 dienen die z. B. aus Weichgummi bestehenden elastischen Druckelemente 16. Im Ausführungsbeispiel sind zwei dieser Elemente 16 und 16' auf den Umfang des Sitzzylinders 10 verteilt. Im Sinne einer gleichmäßigen Verteilung, die einer Verkantung des Sitzzylinders 10 entgegenwirkt, liegen beide elastischen Druckelemente 16 und 16' in derselben durch die Rohrachse gelegten Ebene. Jedes elastische Druckelement 16 liegt mit dem zugeordneten Zwischenelement 17 in einer das Gehäuse 2, 3 und den Rohrstutzen 4 durchsetzenden Bohrung, die nach außen durch den als Vorspannelement dienenden Schraubbolzen 18 abgeschlossen ist. Die in einer Bohrung zusammenliegenden Teile 16, 17, 18 bilden also ein Druckaggregat.

Die Schraubbolzen 18 sind mit einem Schlitz oder einem Sechskantloch für den Schraubschlüssel versehen. Durch Verwendung eines Drehmomenten-Schraubschlüssels kann jeweils der gewünschte Druck auf den Sitzring 10 eingestellt werden.

Der Sitzring 10 weist einen mit einer konischen Fläche versehenen Kragen 10a auf. Das Zwischenelement 17 steht mit seinem dem Druckelement 16 abgewendeten Ende in unmittelbarer flächenhafter Berührung mit der konischen Fläche des Kragens 10a des Sitzringes 10.

Bei der Ausführungsform der Erfindung gemäß Fig. 1 steht die Achse des Druckaggregats 16, 17, 18 senkrecht auf der konischen Fläche des Sitzringkragens 10a, also schräg zur Sitzringachse. Dabei ruht die Stirnfläche der Kuppe des Zwischenelementes 17 unmittelbar auf der konischen Fläche des Kragens des Sitzzylinders. Bei dieser Anordnung wird die Druckkraft des elastischen Druckelementes 16 ohne wesentliche Reibungsverluste vom Druckaggregat 16, 17, 18 unmittelbar auf den Sitzring 10 und damit auf den Dichtungsring 9 übertragen.

## Patentansprüche

1. Hahn mit kugelförmigem Küken (1), einer oberen (2) und einer unteren Gehäusehälfte (3), mit

a) zwei konzentrisch mit der Rohrleitungsachse und je symmetrisch zur Kükenspindelachse angeordneten Dichtungsringen (9),

b) zwei die Dichtungsringe (9) koaxial aufnehmenden, axial in den Rohrstutzen (4) verschiebbaren Sitzringen (10),

c) mehreren auf die Sitzringe (10) in axialer Richtung der Rohrleitung einwirkenden, in einer Bohrung des Gehäuses (2, 3) angeordneten Druckaggregaten, bestehend aus je:

c$_1$) einer von außen zugänglichen Schraube (18) als Vorspannelement zur Einstellung des Dichtungsdruckes,

c$_2$) einem zylindrischen elastischen Druckelement (16), und

c$_3$) einem Zwischenelement (17) zur Übertragung des Druckes auf den zugeordneten Sitzring (10),

dadurch gekennzeichnet, daß

d) die Sitzringe (10) konische Kragen (10a) aufweisen,

e) das Zwischenelement (17) jedes Druckaggregats mit seinem dem elastischen Druckelement (16) abgewendeten Ende in unmittelbarer flächenhafter Berührung mit der konischen Fläche des Kragens (10a) des Sitzringes (10) steht und

f) die Bohrung zur Aufnahme des Druckaggregats (16, 17, 18) senkrecht zur Konizität des Kragens (10a) des Sitzringes (10) orientiert ist.

2. Hahn nach Anspruch 1, dadurch gekennzeichnet, daß die Sitzringe (10) als Zylinder solcher Höhe ausgebildet sind, daß sie sich beim Herausziehen des Kükens (1) nach dem Abnehmen der oberen Gehäusehälfte (2) in der sie aufnehmenden Bohrung des Rohrstutzens (4) nicht verkanten.

## Claims

1. Ball valve (1), having a upper (2) and a lower (3) housing half and

(a) two sealing rings (9) each arranged concentricly with the pipe axis and symmetrically with the valve head axis;

(b) two seating rings (10) which coaxially accommodate the sealing rings (9) and are axially displaceable in the pipe ends;

(c) a plurality of pressure assemblies acting on the seating rings (10) in the axial direction of the pipe and being disposed in a bore in the housing (2, 3), each pressure assembly being comprised of:

c$_1$) an externally accessible screw (18) serving as tensioning element for setting the sealing pressure;

c$_2$) a cylindrical, elastic pressure element (16); and

c$_3$) an intermediate element (17) for transferring the pressure to the associated seating ring (10),

characterized in that

(d) the seating rings (10) are provided with conical collars (10a);

(e) the end of the intermediate element (17) in each pressure assembly facing away from the elastic pressure element (16) is in immediate areal contact with the conical face of the collar (10a) of the seating ring (10); and

(f) the bore for accommodating the pressure assembly (16, 17, 18) is oriented perpendicularly to the conicity of the collar (10a) of the seating ring (10).

2. Ball valve according to claim 1, characterized in that the seating rings (10) are designed as cylinders having such a height that, when the valve head (1) is pulled out after removal of the upper housing half (2), the seating rings will not tilt in the pipe bore in which they are disposed.

## Revendications

1. Robinet à boisseau sphérique (1), dont le corps de robinet est composé d'un demi-corps supérieur (2) et un demicorps inférieur (3) et qui comprend

a) deux joints d'échantéité annulaires (9) disposés concentriquement à l'axe de la canalisation, symétriquement de part et d'autre de l'axe de la broche du boisseau,

b) deux bagues de siège (10) qui recoivent coaxialement les joints d'étanchéité (9) et sont disposées axialement coulissantes dans les tubulures (4) par lesquelles le robinet est incorporé dans la canalisation,

c) plusieurs dispositifs de pression disposés dans un alésage du corps (2, 3) du robinet et agissant sur les bagues de siège (10) dans le sens de l'axe de la canalisation, chacun des dispositifs de pression comprenant:

c$_1$) une vis (18) accessible de l'extérieur et servant d'élément de précontrainte pour le réglage de la pression d'étanchéification,

c$_2$) un élément de pression élastique (16) de forme cylindrique, et

c$_3$) un élément intermédiaire (17) pour transmettre la pression à la bague de siège (10) correspondante,

caractérisé en ce que

d) les bagues de siège (10) présentent des collets coniques (10a),

e) l'élément intermédiaire (17) de chaque dispositif de pression, par son extrémité opposée à l'élément de pression élastique (16), est directement en contact par une aire de surface avec la face conique du collet (10a) de la bague de siège (10), et

f) l'asésage pour la réception du dispositif de pression (16, 17, 18) est orienté perpendiculairement à la face conique du collet (10a) de la bague de siège (10).

2. Robinet selon la revendication 1, caractérisé en ce que les bagues de siège (10) sont réalisées sous forme de cylindres d'une hauteur telle que, lors de l'extraction du boisseau (1), après l'enlèvement du demi-corps supérieur (2), les bagues ne risquent pas de se coincer dans l'alésage qui les reçoit et qui est ménagé dans la tubulure (4).

Fig . 1